# EUROPÄISCHE PATENTSCHRIFT

(11) **EP 0 590 202 B1**
(45) Veröffentlichungstag und Bekanntmachung des Hinweises auf die Patenterteilung: **18.09.1996**
(21) Anmeldenummer: 92121367.4
(22) Anmeldetag: 16.12.1992
(51) Int. Cl.: B01D 53/46, B01J 19/12, B01J 23/56

(54) **Verfahren und Vorrichtung zur Reinigung von Gasen, Abgasen, Dämpfen und Solen, von unerwünschten chemischen Stoffen**
Process and device for removing undesirable chemical compounds from gases, exhaust gases, vapors and brines
Procédé et installation pour éliminer des composés chimiques indésirables des gaz, gaz d'échappement, vapeurs et eaux salées

(30) Priorität: 21.12.1991 DE 4142520; 09.12.1992 DE 4241451
(43) Veröffentlichungstag der Anmeldung: 06.04.1994
(73) Patentinhaber: PCP-PHOTOCATALYTIC PURIFICATION GmbH, D-64839 Münster (DE)
(72) Erfinder: Oeste, Franz Dietrich, D-6309 Münzenberg (DE)
(74) Vertreter: Termin, Erich

(56) Entgegenhaltungen:
- WO-A-91/04094
- WO-A-91/09823
- DE-A- 4 023 995
- DATABASE WPIL Derwent Publications Ltd., London, GB; AN 90-167317

## Beschreibung

Die vorliegende Erfindung betrifft ein Verfahren und Vorrichtungen zur Durchführung des Verfahrens, zur Reinigung von Gasen, Abgasen, Dämpfen und Solen die mit unerwünschten chemischen Stoffen kontaminiert sind oder in höheren Konzentrationen diesen beigemischt sind, mittels Photokatalysereaktionen die an der Oberfläche von Katalysatoren stattfinden.

Die Katalysatoren befinden sich in einem Festbett oder einem Schwebebett auf Katalysatorträgern. Im Schwebebett können die Katalysatoren selbst als Katalysatorträger fungieren. Katalysatorträger und Katalysatoren befinden sich in einem geschlossenen System durch das das zu reinigende Substrat durchgeleitet wird.

Beim Festbettkatalysatorprinzip durchläuft das System Katalysatorträger/Katalysator kontinuierlich oder diskontinuierlich eine Waschzone zum Abwaschen der gebildeten Mineralisationsprodukte.
Die Reaktion wird durch Photonen von kurzwelligem Licht der Wellenlänge zwischen 250 bis 400 nm induziert.

Endotherme chemische Reaktionen benötigen Energie zum Reaktionsablauf. Diese Energie kann der Reaktion in verschiedener Form zugeführt werden. Oft geschieht dies in Form von Photonen verschiedener Lichtwellenlänge.
Da derartige Reaktionen bei relativ niedrigen Temperaturen ablaufen, werden zur Reaktionsbeschleunigung Katalysatoren eingesetzt.
Die beschriebene Kombination der Reaktionsanregung chemischer Reaktionen mit Hilfe von Photonen und der Reaktionsbeschleunigung mittels Katalysatoren wird unter dem Begriff Photokatalyse im weiteren behandelt.

Photokatalysierte chemische Reaktionen finden seit einiger Zeit vermehrtes Interesse. Insbesondere wurde auch schon versucht derartige Reaktionen im Bereich des Umweltschutzes anzuwenden.

So wird zum Beispiel in Environmental Sci.Technol. Vol.17, 10.(1983) 828-31, eine Reaktion zum Abbau von Chloroform durch photoassistierte, heterogene Katalyse in wässriger Suspension von Titandioxid beschrieben.
Chloroform ist ein Hauptbestandteil der sich bildenden Nebenprodukte bei der desinfizierenden, chlorierenden Aufbereitung von Trinkwasser und auch zum Beispiel Wasser in Schwimmbecken.
Dem Chloroform werden carzinogene Eigenschaften zugesprochen.
Das beschriebene Verfahren bezieht sich auf wässrige Suspensionen mit hohem Feststoffanteil, sogenannten slurries. Nachteilig ist bei diesem Verfahren, dass sich als Umsetzungsprodukt Salzsäure bildet, die aus dem System abgetrennt werden muß.

Die Eur.Patentanmeld. 89100265.1, beschreibt ein Verfahren und Vorrichtung zur Reinigung von Schwefelwasserstoff enthaltenden Abgasen, mittels einem wabenförmigen Gerüst aus Aktivkohle mit auf der Oberfläche appliziertem Titandioxid als Katalysator und unter Einwirkung von Ultraviolettstrahlen.
Hierbei adsorbiert die Aktivkohle geruchsaktive Stoffe wie H₂S oder Skatole,die unter Einwirkung von UV zersetzt werden. Das Verfahren ist ein Selektivverfahren und hat den Nachteil, dass nicht die volle verfügbare Oberfläche aktiv zur Wirkung kommt.

In der DE-A-40 23 995.0 wird ein Verfahren zur photokatalytischen Mineralisation von Schadstoffen mittels eines relativ zur Photonenquelle bewegten Katalysatorfestbettes beschrieben.
Gegenüber anderen Verfahren zur Vernichtung von Schadstoffen, beispielsweise der Verbrennung, bietet dieses Verfahren zumindest den Vorteil,dass durch das Verfahren selbst keine zusätzliche Umweltbelastung verursacht wird. Bei der Verbrennung ist dies der Fall, wenn ein Stützbrennstoff eingesetzt werden muß, der in der Regel Kohlendioxid erzeugt.
Beim Verfahren gemäss der obigen DOS muß, auch bei sehr geringen zu handahabenden Schadstoffkonzentrationen im Medium, kein Stützbrennstoff eingesetzt werden und das Verfahren läuft bei einer relativ niedrigen Temperatur ab.
Gelangen allerdings fortgesetzt Schadstoffe zum Einsatz, die neben Kohlenstoff,Wasserstoff,Sauerstoff und Stickstoff noch weitere Elemente enthalten wie zum Beispiel Halogene,Schwefel, Phosphor oder Arsen, bzw Schadstoffe und sonstige zu beseitigende Stoffe , die ausschliesslich aus den letztgenannten bestehen, können sich am Photokatalysator flüssige oder feste Mineralisationsprodukte ansammeln, wie z.Beispiel Phosphorsäure oder Arsensäure. Bei der niedrigen Reaktionstemperatur,von in der regel unter 50°C, verdampfen diese Stoffe nicht. Dadurch wird die Photokatalysefunktion stark herabgesetzt, wodurch die Reaktion schliesslich zum Erliegen kommt.

Des weiteren, sind eine Reihe von herkömmlichen Verfahren zur Beseitigung schadstoffhaltiger Stoffe und entsprechender Kontaminate in Abgasen und sonstigen Medien in denen diese unerwünscht sind,bekannt.

Zu solchen zählen rein physikalische Verfahren wie Adsorption, Absorption oder rein chemische Verfahren wie Chemisorption oder Verbrennung.
Diese Verfahren sind jedoch oft ungeeignet, um die Mineralisierung oder Abscheidung von komplizierten chemischen Verbindungen, wie zum Beispiel Schwefelhexafluorid, mit ökonomisch und ökologisch vertretbaren Mitteln zu erzielen. Die genannten Verfahren sind auch in anderer Hinsicht nachteilig. Die Sorptionsverfahren physikalischer Art unterliegen der Sorbensbeladung. Das beladene Sorbens muß entweder,oft als Sondermüll, entsorgt oder unter hohem Energieaufwand desorbiert werden.
Die alternativen Verbrennungsverfahren verursachen oft einen erheblichen Aufwand zur Reinigung der Verbrennungsabgase einschliesslich der Stützbrennstoffverbrennungsabgase. Da bei der Verbrennung die Verbrennungstemperaturen in der Regel recht hoch sein müßen, ist der Energieaufwand, wenn die Verbrennungsabwärme nicht genutzt wird, extrem hoch.

Alle genannten Verfahren und Vorrichtungen zum Stande der Technik haben gewisse Nachteile inbezug auf deren Einsatzbereichsbreite, Standzeit und der damit verbundenen Gesamtraumzeitausbeute, was den Kostennutzenfaktor erheblich herabsetzt.

Unter Berücksichtigung aller Unzulänglichkeitsfaktoren bestand die Aufgabe ein Verfahren und Vorrichtungen zur Durchführung des Verfahrens zu finden, mittels dem und denen es gelingt die vorher genannten Nachteile zu überwinden, das universeller einsetzbar ist, bei dem die anfallenden Umsetzungsprodukte auf einfache Art aus dem System gebracht werden und auch schwierig zu handhabende chemische Verbindungen, wie zum Beispiel reaktionsträge Halogenkohlenstoffe, Halogenkohlenwasserstoffe oder SF₆, mineralisiert werden können.

Die erfindungsgemässe Aufgabe wurde gelöst durch ein Verfahren zur Reinigung von Gasen, Abgasen, Dämpfen und Solen die mit unerwünschten chemischen Stoffen kontaminiert oder gemischt sind, mittels Photokatalysereaktionen die an der Oberfläche von Katalysatoren stattfinden, wobei
a) die zu reinigenden Substrate über die in einem geschlossenen System befindlichen Katalysatoren geleitet werden, bestehend aus:
   einem Katalysatorträger mit einer hohen spezifischen Oberfläche, bezogen auf das eingesetzte Material, der langzeitresistent ist gegen chemische Korrosion und kurzwelliges Licht und eine mechanische Stabilität besitzt, wie sie für bewegte mechanische Teile erforderlich ist,
   einem auf dem Katalysatorträger sich befindenden Katalysator, bestehend aus mindestens einem halbleiter
   metalloxid oder Oxid der Elemente der IIa oder IIb-Gruppe des Periodensystems der chemischen Elemente , im Gemisch und/oder beladen mit mindestens einem Metall der Platinreihe der Gruppe VIII des Periodensystems der chemischen Elemente,
   einem auf dem Katalysatorträger sich befindenden Katalysator, bestehend aus mindestens einem Element der Gruppe der Lanthanide, Actinide und der IIIb-Gruppe des Periodensystems der chemischen Elemente
b) die Katalysatoren mit kurzwelligem Licht der Wellenlänge von zwischen 250 bis 400 nm bestrahlt werden,
c) der Katalysatorträger mit den Katalysatoren durch mindestens eine im geschlossenen System befindliche Waschzone bewegt wird, welche mit polaren Lösungsmitteln beaufschlagt wird.

Der Katalysatorträger besteht aus mattenartigen,gestrickartigen oder ähnlichen Geweben oder nonvowens,vorzugsweise in Paketform von Edelstahl, Titan,Tantal,Niob,Zirkon,Hafnium,beziehungsweise Metallen der VIII- ten Gruppe des chemischen Periodensystems wie zum Beispiel Palladium oder Platin. Die Oberfläche der Katalysatorträger werden aufgerauht um eine grössere Oberfläche zu erhalten und um die Haftbarkeit der darauf zu applizierenden Katalysatoren zu verbessern. Die Aufrauhung erfolgt mechanisch und/oder chemisch-oxidativ. Beispiele,für das chemische Aufrauhen ist das Säureanätzen, für das oxidative Aufrauhen,das Glühen in einem oxidativen Medium.Die Katalysatorträgerpakete oder Bündel werden in Rahmen oder Glasplatten und ähnlichen Vorrichtungen fixiert, die aus nichtkorrodierbaren Materialien bestehen und die beständig gegen kurzwellige Lichtstrahlen sind.

Auch Porösmaterialien zum Beispiel in Rohrform kommen als Katalysatorträger infrage. Diese können aus dickwandigen Porösrohren bestehen oder aus Porösplatten.
Aus den Porösplatten können Plattensysteme zusammengestellt werden wie nach dem Prinzip der Wärmetauscher.

In besonderen Fällen, vorzugsweise bei der Reinigung von gering oxidativen Medien,kann der Katalysatorträger aus porösem Kohlenstoff oder Kohlenstoff-Fasern bestehen.
Auch poröse Keramikmaterialien mit Zeolithstruktur oder geschlossenzellige organische oder anorganische Polymer- oder Polykondensationsmaterialien kommen als Katalysatorträger infrage.

Die Kataylatorträger sind an sich im erfindungsgemässen Verfahren zum Teil auch schon selbst Katalysatoren, wie zum Beispiel die anoxidierten Metalle des Titans, Zirkons oder die angeätzten Edelmetalle des Platins oder Palladiums. Die anoxidierten bzw. angeätzten Metalle besitzen sehr hohe spezifische Oberfläche und wirken dementsprechend oberflächenaktiv.

Auf die Katalysatorträger werden Katalysatoren aufgebracht bestehend aus halbleiteroxidischem Material im Gemisch und/oder beladen mit einem Metall der Platinreihe der VIII-ten gruppe des Periodensystems der chemischen Elemente.
Die Oxide sind solche gemäss der Formel; M₂Oₓ und M₁M₂Oₓ , wobei darstellen;
- x -: ein stöchiometrischer oder unterstöchiometrischer Wert bezogen zur Wertigkeit der Elemente M₁ und M₂
- M₁ -: Elemente der Gruppen Ia, IIa oder IIb des Periodensystems der chemische Elemente
- M₂ -: die Elemente Ti, Zr, Hf, V, Nb, Ta sowie solche der IIIb-Gruppe wie Yttrium und Scandium.

Die Platinmetalle sind vor allem Palladium, Platin, Rhodium und Ruthenium

Bei sehr schwer abbaubaren chemischen Verbindungen, wie zum Beispiel SF₆ oder den Gemischthalogenkohlenstoffen, wird zu den beschriebenen Katalysatorensystemen noch eine weitere Katalysatorkomponente hinzugefügt bestehend; aus den Elementen der Lanthanide und/oder der Actinide in der Form ihrer Salze, meist der Chloride. Diese werden in die Oxide überführt und auf dem Katalysatorträger appliziert.

Die Abbaureaktion gemäss dem erfinderischen Verfahren mit Hilfe von kurzwelligem Licht erfolgt meist mittels Niederdruckquarzlampen. Die Leistung der Lichtquelle liegt in der Regel, in Abhängigkeit von der Grösse der Reinigungsvorrichtung und der Anordnung der Lichtquellen zwischen 200 bis 1000 Watt. Bevorzugt werden, anstelle von grossen Leistungseinheiten, mehrere Lichtquellen mit kleinerer Leistung eingesetzt. Dies vor allem, um Temperaturstaus innerhalb der Reinigungsvorrichtung zu vermeiden.

Ausser dem beschriebenen Katalysatorfestbettverfahren, wird das erfinderische Verfahren auch nach dem Prinzip des Fluidbett- bzw. Wirbelbettverfahren durchgeführt, worunter auch zu verstehen ist, dass der Katalysator sich im Schwebezustand befindet, getragen durch das Reaktionsmedium.
Der Vorteil des Katalysatorwirbelbettes gegenüber dem Katalysatorfestbett ist die hohe Katalysatorpartikelkonzentration je Bettvolumeneinheit. Das Katalysatorwirbelbett bedingt jedoch einen relativ konstanten Luft- bzw. Gasstrom durch das fluidisierte Partikelbett.
Die Strömungsgeschwindigkeiten des Reaktionsmediums könnten fallweise zu hoch sein.

Die Partikelmobilisation wird deshalb in solchen Fällen dadurch erreicht, dass der Wirbelbettkatalysatorträger, oder zumindest Teile davon, zur Vibration gebracht wird. Dies erfolgt bei Strömungsrichtung mit oder entgegen der Beschleunigungsrichtung im Betrieb unter einfachen Schwerkraftverhältnissen oder in der Zentrifuge, durch induktiv oder piezoelektrisch angeregte Schwingungen.
Um Geräuschemissionen zu vermindern erfolgt die Wirbelbettanregung auch über Ultraschallschwinger.
Bei waagerechter Strömungsrichtung über eine bzw. durch eine Partikeilbettoberfläche kann die Bettauflage auch als geschlossene Oberfläche ausgebildet sein.
Das Vibrationsbett hat gegenüber dem fluiddynamisch angeregten Wirbelbett insofern den Vorteil, dass an die Partikelfraktionierung niedrigere Anforderungen gestellt werden. Eine weitere Bewegtbettpartikelanregungsmethode ist die der bewegten Magnetfeldlinien, wenn die Katalysatorpartikel sich zumindest teilweise auf ferromagnetischen Katalysatorträgern befinden. Durch die bewegten Feldlinien entsteht ein Katalysatorbett, dessen Partikel sich ständig umordnen müssen und somit ständig andere Oberflächenbereiche der Photoneneinwirkung aussetzen müssen.
Der Katalysatorträger mitsamt der Katalysatorbeladung unliegt gemäss dem Katalysatorfestbettverfahrensprinzip einer kontinuierlichen oder diskontinuierlichen Wäsche, zwecks Regenerierung der Katalysatoren. Die Wäsche erfolgt mittels polaren Lösemitteln, vorzugsweise Wasser.
Die Reaktivierung der Katalysatoren ist verbessert, wenn dem Waschmedium oxidierende Stoffe zugesetzt werden.
Solche sind beispielsweise H₂O₂ oder Ozon.
Das Waschen der Katalysatoren erfolgt nach verschiedenen Prinzipien der Verfahrenstechnologie, beispielsweise durchläuft der Katalysatorträger mit den Katalysatoren ein Bad oder wird in ein Bad getaucht, wird besprüht, und abgeschleudert.
In der Regel sind die abzuwaschenden Substanzen gut lösliche anorganische Stoffe.
Falls die Mineralisation,bedingt durch die Zusammensetzung der Verunreinigungskomponenten im zu reinigenden Substrat, ungünstig ist, kann der Katalysatorbelag schlechter löslich sein. In solchen Fällen, aber auch zur generellen Mineralisationsbeschleunigung wird dem Reinigungssubstrat mindestens ein Mineralisationshilfsmittel zugesetzt, wie Wasserdampf oder Ammoniakgas bzw. Ammoniakwasser.

Die Wäsche der Wirbel- bzw. Fluidbettkatalysatoren erfolgt am günstigsten durch einen Austauch der Katalysatorcharge. Bevorzugt wird das Wirbel- bzw.Fluidbettkatalysatorverfahren dort eingesetzt wo nur gasförmige Mineralisationsprodukte entstehen.

In Umkehrung der Substratbeaufschlagung im erfinderischen Reinigungsverfahren, wirkt das Verfahren als Reinigungsverfahren für flüssige Stoffe, wenn das Substratgas aus reinem Gas, Luft, sauerstoffangereicherter Luft besteht und verunreinigtes Wasser ins Substratgas eingedüst wird.

Insgesamt bietet das erfinderische Verfahren das Mittel der Wahl für die speziellen Anforderungen der zu reinigenden Substrate.

Aufgabe der Erfindung war ebenfalls die Findung der Vorrichtungen zur Durchführung des Verfahrens.

Die Aufgabe wurde gelöst durch Vorrichtungen zur Durchführung der verschiedenen Verfahrensweisen wie beschrieben und die dadurch gekennzeichnet sind, dass sie aus folgenden Hauptbestandteilen bestehen.
f) aus einem geschlossenen Gehäuse,aus einem gegen Korrosionen widerstandsfähigem Material, das ausgerüstet ist mit Zu- und Abfluss-Stutzen für das Verfahrenssubstrat und das Verfahrensprodukt sowie Lagern und Klemmen für die Katalysatorträger mit Katalysatoren und die Lichtquellen für kurzwelliges Licht,
g) aus einer Umrahmung zur Aufnahme des Katalysatorträgers mit den Katalysatoren.
h) einem Gerät zur Bewegung des Katalysatorträgers und der katalysatoren durch eine innerhalb des Gehäuses befindliche Waschzone
   sowie
i) mindestens einer Lichtquelle für kurzwelliges Licht im Wellenbereich zwischen 250 bis 400 nm.

Ausgenommen das Wirbel- bzw.Fluidbettverfahren,besitzt das Gehäuse gemäss f) eine Mulde zur Aufnahme einer Badflüssigkeit, ausgestattet mit Stutzen für den Zu- und Ablauf der Badflüssigkeit.

Der Katalysatorträger mit den Katalysatoren eingefasst in einen entsprechenden Rahmen,Käfig oder anderweitig fixiert,bewegen sich während dem Verfahrensablauf derart durch das Bad in der Mulde, dass sie diese mindestens in vollem Umfang durchlaufen.

Andererseits kann die Katalysatorwäsche im Sprühverfahren so erfolgen, dass das Sprühmittel in eine Mulde abtropft aus der es abgeleitet oder im Kreislaufverfahren wieder in den Prozess eingebracht wird.

Wegen der guten Langzeitwirksamkeit der Katalysatoren, kann sowohl die Bad- als auch die Sprühwäsche intervalmässig erfolgen.

Oft ist die Umrahmung g) ein zylindrisches Gebilde, mit einer Mittelachse, einem Hohlraum um die Achse und darauffolgend einem Behälter in Rundform, der in Taschen unterteilt sein kann und der beidseitig mit der Mittelachse so verbunden ist dass ein geschlossener Behälter entsteht 14 und die äusseren 62 und inneren 63 Zylindermäntel so konstruiert sind, dass sie gut gasdurchlässig sind und den Katalysatorträger mit den Katalysatoren gut aufnehmen und fixieren.

Die Umrahmung zur Aufnahme von Katalysatorträger und Katalysatoren kann verschiedenartige geometrische Formen haben und kann zum Beispiel ein quadratisches Gebilde in Paketform sein, das im Gehäuse gemäss g) aufwärts und abwärts pendelt und dabei ins Waschbad taucht.
Bei solchen Verfahrensvarianten muß gewährleistet sein, dass der Reinigungsprozess während der Waschprozedur nicht unterbrochen wird oder Mehrfachsysteme vorhanden sind, die durch Schaltsynchronisierungen, die zu reinigenden Substrate in die jeweils verfügbare Reinigungseinheit leiten.

Beim Wirbel- bzw. Fluidbettverfahren entfällt ein entsprechender Rahmen. Der Katalysatorträger samt Katalysatoren schweben im Raum und besitzen einen Stützboden oder Stütztrommel, die gasdurchlässig jedoch undurchlässig für Materialpartikel sind.

Zum Verfahren selbst sei noch erwähnt dass es nicht nur in oxidativem Medium funktioniert, sondern auch in reduktivem. So zum Beispiel bei der Reinigung von extrem reaktionsträgen Chlofluorkohlenwasserstoffen. Diese lassen sich am vorteihaftesten unter Sauerstoffausschluß mineralisieren, in Gegenwart von H₂S, CS₂ oder COS bzw. deren Gemischen. Hierbei ist auch die Anwesenheit von Wasser und/oder Ammoniak reaktionsfördernd.
Andere Reduktionmittel die abspaltendes HCl bzw. Cl⁻ eliminieren sind zum Beispiel Dithiole, Mercaptane, Thiophenole und deren Alkalisalze, Natriumsulfid und Natriumpolysulfid, die in Gasform oder gelöst z.Beispiel in Wasser in den Prozess gebracht werden.
In Umkehrung der Verhältnisse können so die genannten Schwefelverbindungen als unerwünschte Verunreinigungen gemäss dem erfinderischen Verfahren eliminiert werden.
Das insbesondere deshalb, weil diese Verbindungen extrem geruchsintensiv sind.

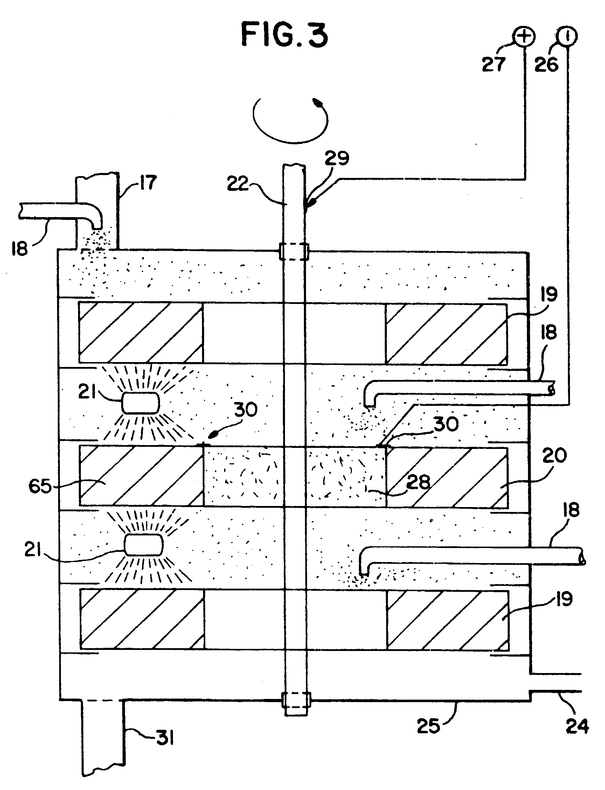

Viele Gase enthalten wesentliche Anteile der kovalent gebundenen Schadstoffe in Aerosolform. Um die Abscheidung dieser Bestandteile zu fördern, ist es nach einer Variante des erfindungsgemässen Verfahrens vorteilhaft das Katalysatorfestbett mit einer Quelle elektrischer Spannungspotentialdifferenz zu verbinden, wobei je nach der Festbettgeometrie als Gegenelektrode das Gehäuse f) selbst oder geeignet angeordnete Drähte oder auch ein weiteres Katalysatorfestbett dienen kann, wie in Fig. 3 gezeigt.

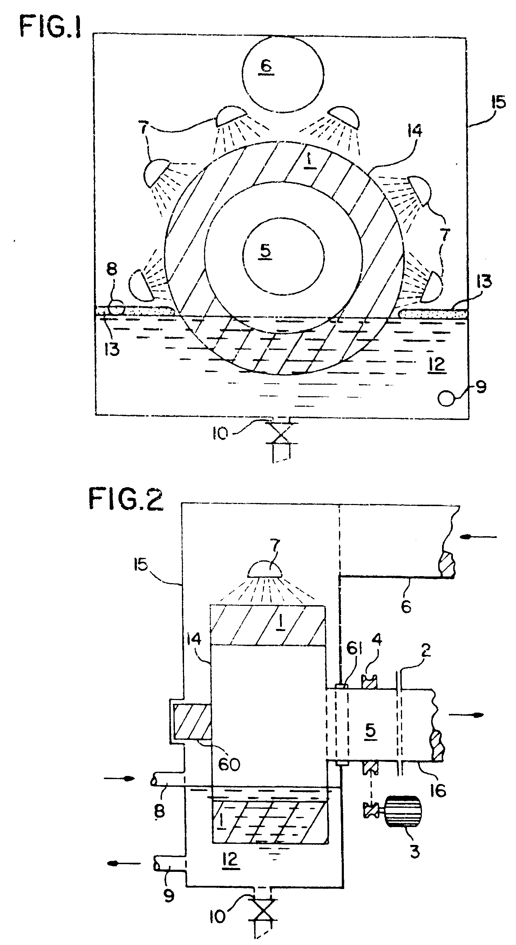

Überraschenderweise funktioniert das neue Verfahren auch wenn die wässrige Phase, das Bad bzw. Waschwasser nach dem Besprühen des Katalysators,durch organischchemische Stoffe verunreinigt ist. Die Verunreinigungen werden durch den Katalysatorträger und die Katalysatoren aus der wässrigen Phase adsorptiv und adhäsiv aufgenommen.
So werden zum Beispiel sogar Ölfilme von der Wasseroberfläche und gelöste Stoffe aus der wässrigen Phase vom Katalysatorfestbett aufgenommen, gelangen in die Gasphase und werden mittels Photoneneinwirkung mineralisiert.
Diese Variante zeigt die Einsatzmöglichkeit des Verfahrens zur Reinigung stark belasteter und durch andere Massnahmen nur äusserst schwer zu reinigender Abwässer.
Um zu vermeiden dass die Mineralisationsstoffe,wie z.Beispiel HCl in das gereinigte Abwasser gelangen, kann beispielsweise ein Teil der Lichtquellen durch Sprühvorrichtungen ersetzt werden, wobei dann das Spülwasser mittels Rinnen,unterhalb des Katalysatorträgers im Sprühbereich aufgefangen und abgeleitet wird.
Die Vorrichtungen zur Durchführung des Verfahrens werden beispielhaft durch die Figuren 1 bis 6 illustriert
- Fig.1 -: zeigt eine Vorrichtung des Standardtyps. Der Reaktionsteil- Reaktionsraum 11 ist durch das Bad 12
und die Seitenwand des zylindrischen Behälters 14 hermetisch so geschlossen, dass das zu reinigende Substrat durch das photonenbestrahlte 7 Katalysatorfestbett 1 hindurchmuss. In diesem Bereich findet die photokatalytische Mineralisation der unerwünschten Substratbestandteile statt. Das Reinprodukt verlässt über die Hohlachse 5 die Reinigungsvorrichtung 15.
In Bad 12 wird das Katalysatorfestbett mit Katalysatoren gewaschen und von den Mineralien befreit, die über Stutzen 10 mit dem Waschwasser abgeleitet werden.
- Fig. 2: zeigt die gleiche Vorrichtung im Mittelachsenvertikalschnitt.
- Fig. 3: zeigt eine Vorrichtungsvariante für die Reinigung kovalent gebundener Schadstoffe in Aerosolform.
Die Reinigung erfolgt vorteilhaft mithilfe eines elektrischen Spannungsfeldes wie in Beispiel 8 beschrieben.
- Fig. 4: zeigt eine Vorrichtungsvariante zur Reinigung extrem schwer zu beseitigender Schadstoffe.
Die Vorrichtung ist so konzipiert, dass die Reinigung im Zweistufenverfahren erfolgt. Die erste Reinigungsstufe erfolgt zwischen den Kammerbereichen 34/51, die zweite zwischen den Kammerbereichen 42/52. Der Verfahrensablauf wird im Detail in Beispiel 5 beschrieben.
- Fig. 5: zeigt einen Vertikalkalschnitt der Vorrichtung gemäss 4.
- Fig. 6: zeigt eine Vorrichtungsvariante mit Waschfüssigkeitsbeaufschlagung zusammen mit dem zu reinigenden Substrat. Die Reinigung von Katalysatorträger und Katalysatoren erfolgt durch Abschleudern der Waschflüssigkeit, wie in Beispiel 9 beschrieben.

Die Anwendungsgebiete des neuen Verfahrens sind äusserst vielfälltig. Das Festbettkatalysatorverfahren findet Anwendung im Haushalt bei der Luftreinigung auch bei der Hausrauchgasreinigung, im Verkehrswesen zur Umluftreinigung und Abluftreinigung, im öffentlichen Bereich,wie Schulen,Parkhäuser,Krankenhäuser zur Reinigung von Umluft und Abluft.
In vielen anderen Bereichen findet sowohl das Festbettals auch das Wirbelbettkatalysatorverfahren Anwendung,so zum Beispiel im produzierenden Gewerbe in Lackfabriken und Lackierereien, in Klebstoff-Fabriken und der Klebstoffanwendung, in Druckfarbenfabriken und Druckereien zur Beseitigung von Lösemittel- und Weichmacherdämpfen. Des weiteren in der chemischen und Pharmaindustrie sowie in Raffinerien und Kokereien, zur Beseitigung von jeglichen schadstoffhaltigen Substanzen nach Variation des erfindungsgemässen Verfahrens je nach Erfordernis. Ebenso im Bereich des Arbeitsschutzes, wie Schweißanlagen.
Im Bereich der Dekontamination von Grundwasser und Böden bei der Altlastaufarbeitung oder bei Unfällen.
Bei der Vernichtung von FCKWs,PCBs und sonstigen Umweltgiften,sowie von Problemnebenprodukten der Halbleiterindustrie, wie AsH₃,SiCl₄,SiHCl₃,SiH₄,SF₆,MoF₆ oder der Viskoseherstellungsabluft von CS₂ und H₂S, oder des black liquors bei der Zelluloseherstellung sowie Galvanik und Gerbereiabwässern,sowie Pestizidverunreinigungen.
Bei der Vernichtung von Chemiewaffengasen wie zum Beisp. LOST und Nervengasen der Phosphorverbindungen.
Andererseits ist die Anwendung des Verfahrens auch in der Reinraumtechnologie angezeigt, da nach der Vorreinigung,selbst Restspuren von Feinstpartikeln noch bedeutend herabgesetzt werden können.

Das neue Verfahren leistet einen erheblichen Beitrag zur Lösung der Umweltproblematik,ist zudem selbst sehr energieschonend und kostengünstig.
Nachfolgende Beispiele belegen einige Möglichkeiten des Verfahrens und der Vorrichtungen.

### Beispiel 1

### Präparation des Katalysatorträgers

Eine dreidimensionale Edelstahldrahtgestrickmatte mit einer Schichtdicke von 50 mm wird zu einem Streifen von 150 mm Breite und 1000 mm Länge zugeschnitten.
Die Gestrickmaschenweite liegt bei ca 10 mm. Aus dem zugeschnittenen Mattenstreifen wird ein Hohlzylinder geformt mit den Maßen, Zylinderdurchmesser außen ca 30 cm innen 20 cm, Zylinderhöhe ca 15 cm.
Durch Einflechten von Edelstahldrähten wird das Gestrick in dieser Form fixiert.
Danach wird der Formzylinder mit Graugußstrahlmittel der Körnung von 0,2 bis 0,4 mm gestrahlt, bis die Oberfläche der Gestrickdrähte gut angerauht ist, was man an der Drahtmattierung erkennt.
Der Gestrickdrahtdurchmesser beträgt nach dieser Vorbehandlung ca 0,2 mm. Danach wird das Drahtgestrick gut gewaschen und getrocknet.
Nun wird das Drahtgestrick in eine Wasserglaslösung der Dichte 1,4 kg/l eingetaucht und gut benetzt.

Aktivkohlekurzfasern der durchschnittlichen Länge von 1,0 bis 3,5 mm, die bevorzugt durch das Zerschneiden von Aktivkohlefaservliesen erhalten werden, werden in eine 5%-ige wässrige Zitronensäurelösung eingetragen. Die Kohlenstoff-Fasern sedimentieren vollständig in der Zitronensäurelösung und werden danach von dieser durch Dekantieren und Filtrieren abgetrennt und bei 70°C bis zur Gewichtskonstanz getrocknet.
Durch Herausschütteln aus einem Sieb werden die Fasern danach auf das wasserglasbenetzte Drahtgestrick aufgeflockt und zwar so lange, bis die Drahtgestrickoberfläche möglichst vollständig mit Kohlenstoffkurzfasern bedeckt ist. Das derart präparierte Drahtgestrick wird danach mittels einer Sprühvorrichtung gleichmässig mit einer 5%-igen wässrigen Wasserglaslösung eingesprüht und danach mit einer 5%-igen wässrigen Zitronensäurelösung besprüht und bei 110°C bis zur Gewichtskonstanz getrocknet.
Durch diese Prozedur entsteht auf der Aktivkohlefaserbeflockung eine dünne Kieselgelschicht.

Anschließend wird durch mehrmaliges Eintauchen des präparierten Drahtgeflechts,in ein Wasserbad,das gesamte lösliche Salz vom Drahtgestrick abgewaschen.
Nun wird das Drahtgestrick abschließend bis zur Gewichtskonstanz bei 70°C getrocknet.

### Präparation des Katalysators

Es wird eine Suspension hergestellt, enthaltend;
5% Titandioxidpulver der Rutilform der Korngrösse kleiner 0,1 mm,
10% Äthyltitanat, 3% Bentone gequollen in Xylol
0,5% Palladiummetallkolloid,
0,5% Rhodiummetallkoloid und
81,0% xylol

### Aufbringen des Katalysators auf den Katalysatorträger

Die Katalysatorsuspension wird durch Besprühen oder Tauchen auf den Katalysatorträger aufgebracht und bei einer Temperatur zwischen 20 bis 50°C sowie einer relativen Luftfeuchtigkeit zwischen 50 bis 95% getrocknet.
Der wie beschrieben präparierte Katalysatorträger mitsamt dem Katalysator wird dann in den Apparateteilen der Fig. 1 bis 2, Behälter 14 fixiert.

### Verfahrensablauf

Der Behälter 14 mitsamt dem Katalysatorträger und Katalysator 1 , befindet sich auf einer drehbaren Achse 60 gelagert in den Lagern 61 in einem geschlossenen Gehäuse 15. Katalysatorträger und Katalysator bilden das Katalysatorfestbett 1.
Der zylindrische Behälter 14 ist beidseitig geschlossen. Der Strom des zu reinigenden Substrats tritt durch den Einlaufstutzen 6 in die Reinigungsvorrichtung der Fig. 1 und 2, Gehäuse 15. Da das Gehäuse 15 hermetisch geschlossen ist,kann das zu reinigende Substrat nur das Katalysatorfestbett 1 durchdringen um durch die Hohlachse 5 die gleichzeitig Auslaufstutzen ist, als gereinigtes Produkt die Reinigungsvorrichtung verlassen.

Das Katalysatorfestbett 1 wird während dem Reaktionsablauf durch mehrere 200 Watt Niederdruck-Quarzlampen 7 aktiviert. Der Zylinder (Behälter) 14 dreht sich während der Arbeitsphase beständig um die Zylinderachse 60 ,angetrieben über die Hohlachse 5.
Der Antrieb erfolgt mittels einem Motor 3 über eine Riemen- oder Zahnradscheibe 4.
Während der Arbeitsphase taucht das Katalysatorfestbett durch die Drehbewegung ständig mit dem vollen Mantelumfang in das Bad 12, das in diesem Falle ein Wasserbad ist und sich im unteren Gehäuseteil des Gehäuses 15 befindet. Das Waschwasser wird dem Bad durch den Stutzen 8 zugeführt, in einer Menge von ca 2 bis 5 l/h, und wird über den Stutzen 9, beladen mit den Mineralisationsprodukten, aus dem Bad abgeleitet.
Die Badoberfläche ist, um eine Verdunstung und Erwärmung des Bades zu minimieren, mit isolierenden Schwimmkörpern 13 im Einwirkungsbereich der Quarzlampen 7, abgedeckt. Der behälter 14 wird mit einer Geschwindigkeit von ca 0,5 bis 1,0 Umdrehungen pro Stunde gedreht.
Als Waschwasser wird Leitungswasser verwendet, vorzugsweise jedoch Ionenaustauscherwasser.

Der operative Verfahrensablauf erfolgt wie folgend.

Ein Luftstrom von 0,3 l/s wird durch Hindurchleiten durch eine gekühlte Wasservorlage auf eine Wassersättigung von ca 90% eingestellt.
Ein weiterer Luftstrom von 0,1 l/s wird durch eine 2-l-Waschflasche geleitet, die zur Hälfte mit einer Lösung verschiedener biozider Verbindungen gefüllt ist.
Die Biozidlösung hat danach fofgende Zusammensetzung;
- 3o %: Profenofos (O-Ethyl-S-propyl-O-(2-chlor-4-bromphenyl)-thiophosphat; C₁₁H₁₅BrClO₃PS),
- 25 %: Chlorofos (O,O-Dimethyl-2,2,2-trichlor-1-hydroxyethanphosphonat; C₄H₈Cl₃O₄P),
- 5 %: Kakodyloxid (Bis(dimethylarsyl)oxid; As₂(CH₃)₄O),
- 25 %: Demeton-S (O,O-Diethyl-S-(ethylthio)ethylthiophosphat; C₈H₁₉O₃PS₂),
- 15 %: Fluoressigsäure-n-butylester (C₆H₁₁FO₂).

Die beiden Luftströme werden mittels eines statischen Mischers vermischt und durch die Vorrichtung der Fig. 1 und 2 geleitet. Ein abgemessenes Quantum des durch das Katalysatorfestbetts geleiteten Gasstromes wird zur Analyse abgezweigt und in einer Knallgasflamme verbrannt. Deren Abgas wird in einem Quarzkühler kondensiert und zwar so, dass das aus dem Kühler abtropfende Kondensat in eine verdünnte Wasserstoffperoxidlösung einläuft.
In Zeitabständen von ca 2 Stunden wird die Wasserstoffperoxidlösung auf ihren gehalt an Fluorid, Bromid,Sulfat,Phosphat und Arsenat untersucht.
Neben Wasserstoffperoxid enthält die Lösung noch eine geringe Menge Kaliumjodid.

Der Versuch wird während zwei Wochen ununterbrochen durchgeführt. Auch nach diesen zwei Wochen konnte in der Wasserstoffperoxidlösung keine der genannten Ionen nachgewiesen werden.

### Beispiel 2 (Vergleichsbeispiel)

Das Verfahren wird genau wie in Beispiel 1 beschrieben durchgeführt, jedoch erfolgt bei diesem Versuch keine Wäsche des Katalysators. Bereits nach einer Versuchsdauer von 24 Std. werden in der Prozessabluft Verunreinigungen festgestellt.

### Beispiel 3

Der Versuch wird unter sonst gleichen Bedingungen wie in Beispiel 1 durchgeführt, mit dem Unterschied, dass die Katalysatorwäsche nicht mittels einem Baddurchlauf erfolgt, sondern erfolgt die Katalysatorwäsche durch das Besprühen des Katalysators,mit Katalysatorbett,von der Innenseite des Behälters 14 aus.
Die Waschflüssigkeit wird über den Stutzen 10 abgeleitet. Der Behälter 14 läuft während der Waschprozedur mit Umlaufgeschwindigkeiten von zwischen 300 bis 1500 Umdr./Min. Die Waschprozedur erfolgt diskontinuierlich in Abständen, abhängig von der Verunreinigung der zu reinigenden Substrate, im Bereich zwischen 2 bis 24 Stunden.

Die Prozessabluft besitzt die gleiche Qualität wie in Beispiel 1.

### Beispiel 4

Der Versuch wird genau wie in Beispiel 1 beschrieben durchgeführt, mit dem Unterschied, dass die Katalysatorwäsche diskontinuierlich erfolgt. Dass Bad 12 wird alle 2 Stunden für die Dauer von 15 Min. befüllt und danach wird das Waschwasser abgelassen.
Unter diesen Bedingungen wurden ebenfalls beste Ergebnisse, wie in Beispiel 1,erzielt.

### Beispiel 5

### Präparation des Katalysatorträgers und des Katalysators

Eine Edelstahlgestrickmatte mit einer Schichtdicke von 20 mm wird in Streifen von 38 cm Länge und 4 cm Breite geschnitten und durch Korundstrahlen aufgerauht. Die aufgerauhten Edelstahlstreifen werden mit Wasserglaslösung entsprechend wie in Beispiel 1 behandelt.

1,5 kg Aluminiumoxidkurzfasern mit einer durchschnittlichen Länge von zwischen 1 bis 3 mm und einem Faserdurchmesser von ca 0,1 mm, werden mit einer Lösung, bestehend, aus 75 g Thoriumtetrachlorid, 30 g Certrichlorid und 15 g Yttriumtrichlorid,gelöst in 3 l Wasser, verrührt.
Nun wird Natronlauge zugesetzt bis zur Neutralreaktion der Lösung. Die Chloride werden in deren Hydroxide umgewndelt und schlagen sich auf der Faseroberfläche der Aluminiumoxidfasern nieder.
Die applizierten Fasern werden abfiltriert,neutral gewaschen und getrocknet.

Die trockenen Fasern werden durch einen vertikalen Luftstrom fluidisiert und die zuvor mit Wasserglas benetzten Edelstahlgestrickstreifen durch Eintauchen in das Kurzfaserfluidbett beflockt.
Um eine hohe Faserdichte zu erreichen, werden die Edelstahlgestrickstreifen während der beflockung mit einer elektrischen Stromquelle mit relativ hoher Spannung von 5 KV gesetzt.
Direkt danach werden die beflockten Streifen unter CO₂-Begasung bei Raumtemperatur zur Gewichtskonstanz,anschliessend unter Stickstoffbegasung langsam auf 400°C ansteigend getrocknet und bei dieser Temperatur ca 2 Std. belassen.

Die erhaltenen Streifen werden durch Waschen von den Alkalicarbonaten befreit und getrocknet.
Anschliessend wird der vorpräparierte Katalysatorträger, wie in Beispiel 1 beschrieben,mit palladium- und rhodiumdotiertem Titandioxid beschichtet und fixiert.

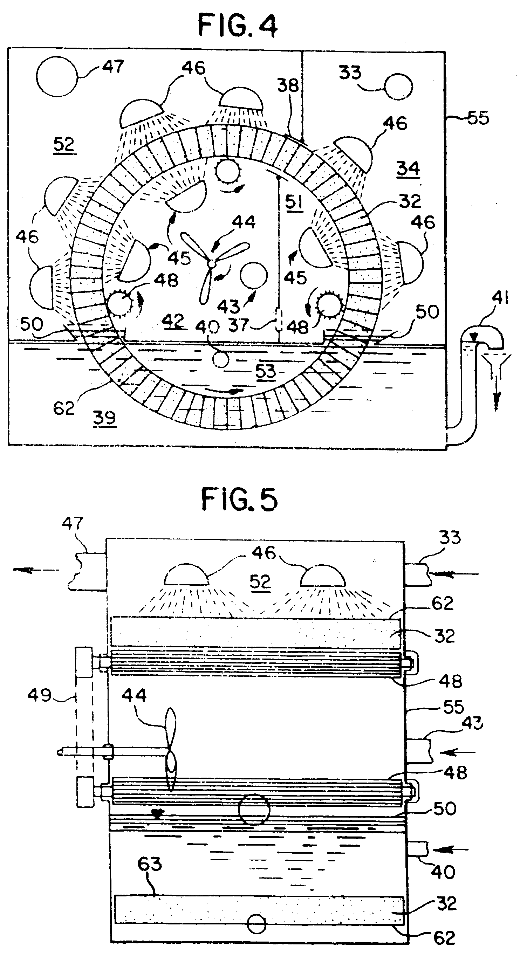

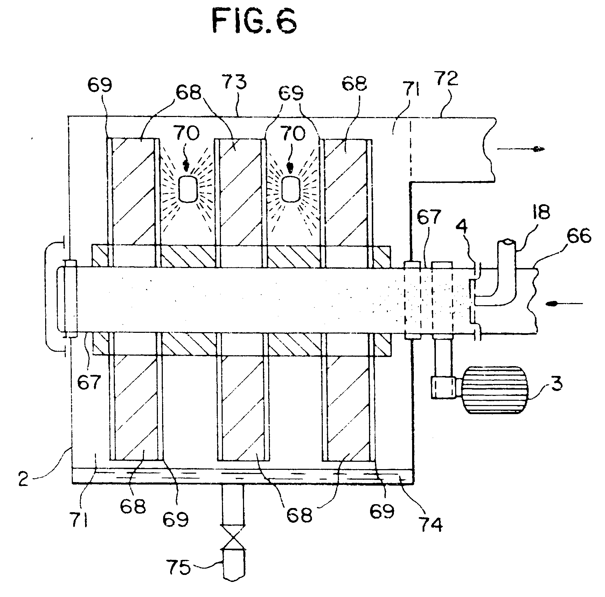

Die so erhaltenen Katalysatorträger mit den Katalysatoren werden nun in die 64 Taschen 32, des Katalysatorträgerzylinders 20 gemäss den Fig. 4 und 5 eingelegt, wonach der Zylinder 20 im Gehäuse 55 montiert wird.

Der Zylinder 20 wird im Kammergehäuse 55 derart angeordnet, dass er drehbar sich mit Teilbereichen in jeder der zwei Kammern gleichzeitig befindet.
Jede der zwei Kammern 34/51 und 42/52 wird durch den Zylinder 20 zweigeteilt, in einen Substrat und einen Produktteil.

Durch die im Verbund angetriebenen Trägerrollen 48, wird Zylinder 20 entgegen dem Uhrzeigerlauf mit 30 Uph zentriert gedreht.

### Verfahrensablauf

Durch Substratzuführstutzen 33 wird Stickstoffgas, enthaltend 1000 ppm Schwefelhexafluorid, 5000 ppm Schwefelkohlenstoff, 10000 ppm Ammoniak und 20 g/m³ Wasserdampf mit 23°C in kammer 34, mit 0,3 l/s eingeleitet.
Die beiderseitigen Quarzlampen 45 und 46 sind eingeschaltet. Das Photoemmissionsmaximum liegt bei 300 - 400 nm.
Das Gas durchströmt das Katalysatorbett 62, wo fast die gesamten Verunreinigungen zu Elementarschwefel,Ammoniumfluorid und Kohlendioxid umgesetzt werden.
Schwefel und Ammoniumfluorid verbleiben auf dem Katalysator. Das Gas gelangt nun durch Öffnung 37 in Kammer 42, wo 0,3 l/s bei 20°C wasserdampfgesättigter Luft bei 25°C ,durch Stutzen 43 zugemischt werden.
Ventilator 44 sorgt für die Gasdurchmischung.

Während gleicher Photoneneinwirkung wie bisher gelangt das Gasgemisch über das Katalysatorbett 62 in Kammer 52.
Das Gas in Kammer 52 enthält nun mehr keine Verunreinigungen, auch kein Schwefeldioxid. Im Katalysatorfestbett des Kammerbereichs 42/52 werden Restverunreinigungen zu Ammoniumsulfat und Ammoniumhydrogensulfat umgesetzt, ebenso der sich auf dem Katalysator befindliche Elementarschwefel.
Das Reinprodukt verlässt über Stutzen 47 die Reinigungsvorrichtung.
Das Katalysatorbett wird während dem Durchlauf durch das Bad 63 ständig gewaschen. Das Waschwasser wird mit 2 l/h in den Badoberteil 39 über stutzen 40 eingeleitet und durchläuft waschend das Katalysatorbett in Badunterteil 53.

Während der Waschprozedur werden die mineralisierten Salze, wie Fluoride und Sulfate ausgewaschen. Das belastete Waschwasser verlässt über Syphon 41 die Reinigungsvorrichtung. Die Niveautrichter 50 werden durch die Syphonhöhe im Wasserstand reguliert.
Der Ammoniakgehalt des Waschabwassers wird über den pH-wert gesteuert, mit zwischen 6,5 bis 7,5.
Die Dichtungen 38 minimieren den Gasübertritt von Kammer zu Kammer.

### Abwasseraufbereitung

Das Waschabwasser wird mit Kalkmilch versetzt, wobei Sulfat und Fluorid als Gips und Flußspat ausfallen.
Danach wird das Waschabwasser über eine Füllkörperkolonne im Gegenstromprinzip mittels Luft gestrippt. Die ammoniakhaltige Strippluft wird recycelt , über Öffnung 37, in Kammer 42 wieder in den Prozess eingeführt.

Die ausgefällten Calziumsalze werden abfiltriert und deponiert. Das Filtrat ist als Brauchwasser wiederverwendbar.

Höchstschädliche chemische Verbindungen werden somit in harmlose Mineralsalze überführt.

### Beispiel 6

Wie Beispiel 5 , nur Substratzusammensetzung wie folgend; 500 ppm Bromtrifluormethan (Halon), 200 ppm Difluordichlormethan, anstelle von Schwefelhexafluorid , 5000 ppm H₂S anstelle von Schwefelkohlenstoff.

Mehr als 95% kovalent gebundenes Halogen wird zu Halogenid mineralisiert.

Waschabwasserfiltrat ist in diesem falle kein Brauchwasser, da es Calciumchlorid und Bromid enthält.

### Beispiel 7

Wie Beispiel 5, nur wird anstelle einer Edelstahldrahtgestrickmatte eine solche aus Titandraht mit einer Drahtstärke von unter 0,5 mm eingesetzt, vorzugsweise in angerauhter Form.
Durch Glühen der Gestrickmatte im Sauerstoffstrom entsteht auf der Drahtoberfläche eine Titandioxidschicht mit im Verfahren erforderlicher katalytischer Wirkung.

Durch anschliessendes Dotieren des Drahtgestricks mit einem oder einem Gemisch von Platinmetallen und/oder oxidischen Elementverbindungen bzw. deren Gemischen aus der Reihe der Lanthanide,oder des Yttriums oder der Actinide werden gleich gute Ergebnisse bei der Durchführung des Verfahrens erhalten.

### Beispiel 8

Viele Gase enthalten Anteile der kovalent gebundenen Schadstoffe in Aerosolform. Um diese besser abscheiden zu können, ist es vorteilhaft, das Photokatalysatorfestbett mit einer Quelle elektrischer Potentialdifferenz elektrisch leitend zu verbinden, wobei entsprechend der Katalysatorfestbettgeometrie als Gegenelektrode das Gehäuse oder geeignet angeordnete Drähte oder ein zweites oder weiteres Katalysatorbett dienen kann.

Figur 3 zeigt die Anordnung von drei Katalysatorfestbetten 19,65 ,die rotierend auf einer gemeinsamen Achse 22 im Gehäuse 25 angeordnet sind. Die beiden äusseren Katalysatorbetten 19 sind elektrisch leitend mit der leitfähigen Metallachse 22 und über Schleifkontakt 29 mit der positiven Spannungsquelle 27, verbunden.

Das mittlere Katalysatorbett 65 ist durch Kunststoffhülse 28 gegen Metallachse 22 isoliert und erhält von Spannungsquelle 26 über Schleifkontakt 30 negative Ladung.
Zwei Photonenquellen 21 befinden sich zwischen den rotierenden Katalysatorbetten 19,65 statisch angeordnet.
Das über 17 in die Reinigungsvorrichtung eintretende Substrat wird mittels Sprühdüsen 18 mit Waschflüssigkeitsaerosol angereichert.
Die Rotationsgeschwindigkeit der Katalysatorbetten ist variabel und liegt zwischen 10 bis 500 Upm.
Die Rotationsgeschwindigkeit wird intervalweise zum Höchst wert gesteigert wenn die Katalysatorbetten durch Abschleudern gereinigt werden.
Die abgeschleuderte Waschflüssigkeit verlässt über Stutzen 24 das Gerät. Das gereinigte Gas über Stutzen 31.

Die bevorzugte Spannungsdifferenz zur Aerosolabscheidung liegt zwischen 5.000 bis 30.000 Volt.

Die Katalysatorträgerpräparation erfolgt gemäss den Beispielen 1 bzw. 5.

### Beispiel 9

Figur 6 zeigt eine weitere Verfahrensvariante mit Aerosolbeaufschlagung.
Das Substrat - verunreinigtes Gas - wird über Stutzen 66 und Hohlachse 67 durch die Katalysatorbetten 68 geleitet.

Das Substrat wird über Einspritzdüse 18 mit Waschflüssigkeit angereichert. Die Katalysatorbetten befinden sich zwischen scheibenartigen runden Quarzglasplatten 69, die fest mit der Hohlachse verbunden sind.
Die Hohlachse ist im Bereich der sich zwischen den Quarzglasscheiben befindlichen Katalysatorbetten gasdurchlässig.

Die Hohlachse wird über einen Motor mit Antriebsaggregat4 zur Rotation gebracht, ähnlich wie in Beispiel 8, wodurch das Katalysatorbett mitrotiert.
Zwischen den Katalysatorbetten, befinden sich jeweils UV- Lampen 70 als Photonenlieferanten.
Das Verfahrenssubstrat gelangt nach der Reinigung in Kammer 71 und verlässt als Reinprodukt über Stutzen 72 die Vorrichtung.
Zur Aerolabscheidung wird der Reinigungsvorrichtung ein Füllkörperscrubber nachgeschaltet.

Das Waschaerosol agglomeriert bzw. koalesziert im Katalysatorfestbett, wird an die Vorrichtungswand 73 geschleudert sammelt sich im Bodenbereich 74 und verlässt über 75 die Vorrichtung.

### Beispiel 10

Eine Variante zu Beispiel 9 besteht darin, dass das Photokatalysatorfestbett durch eine dichte phototransparente Einhausung fixiert ist. Der Katalysator wird in Glaskanälen fixiert. Dies erfolgt durch Katalysatorauftrag auf die Glaswände der Kanäle bzw. Poren.
Bei weiten Kanälen mit ca 1 mm Durchmesser und mehr, wird der Katalysator als Partikelschüttung fixiert.
Die Fixierung des Katalysators an der Glasoberfläche wird durch vorangegangenes Anätzen der Glasoberfläche verbessert.

### Beispiel 11

Wird wie in Beispiel 9 die Einspritzdüse mit zu reinigendem Wasser und der Stutzen 66 mit sauberer Luft gespeist, fungiert die Apparatur als Abwasserreinigungsanlage.

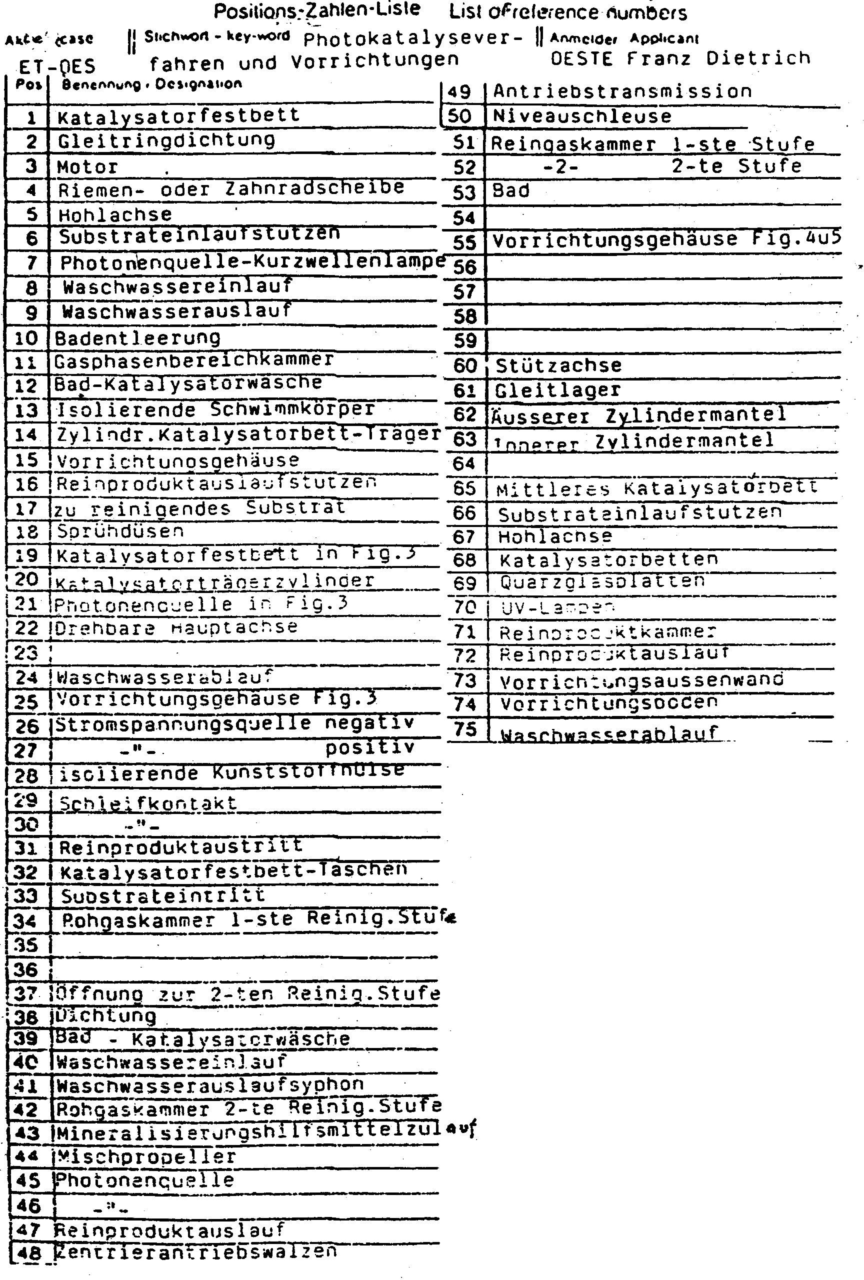

## Patentansprüche

1. Verfahren zur Reinigung von Gasen, Abgasen, Dämpfen und Solen die mit unerwünschten chemischen Stoffen kontaminiert oder gemischt sind, mittels Photokatalysereaktionen die an der Oberfläche von Katalysatoren stattfinden, wobei,
a) die zu reinigenden Substrate über die in einem geschlossenen System befindlichen Katalysatoren geleitet werden, bestehend aus:
einem Katalysatorträger mit einer hohen spezifischen Oberfläche, bezogen auf das eingesetzte Material, der langzeitresistent ist gegen chemische Korrosion und kurzwelliges Licht und eine mechanische Stabilität besitzt, wie sie für bewegte mechanische Teile erforderlich ist,
einem auf dem Katalysatorträger sich befindenden Katalysator, bestehend aus mindestens einem halbleiter metalloxid oder Oxid der Elemente der IIa oder IIb-Gruppe des Periodensystems der chemischen Elemente , im Gemisch und/oder beladen mit mindestens einem Metall der Platinreihe der Gruppe VIII des Periodensystems der chemischen Elemente,
einem auf dem Katalysatorträger sich befindenden Katalysator, bestehend aus mindestens einem Element der Gruppe der Lanthanide, Actinide und der IIIb-Gruppe des Periodensystems der chemischen Elemente
b) die Katalysatoren mit kurzwelligem Licht der Wellenlänge von zwischen 250 bis 400 nm bestrahlt werden,
c) der Katalysatorträger mit den Katalysatoren durch mindestens eine im geschlossenen System befindliche Waschzone bewegt wird, welche mit polaren Lösungsmitteln beaufschlagt wird.

2. Verfahren nach Anspruch 1, dadurch gekennzeichnet, das der Katalysatorträger aus angerauhten Geweben oder nonvowens von Edelstahl, Titan, Tantal, Niob, Zirkon, Hafnium, Metallen der VIII-ten Gruppe des chemischen Periodensystems besteht und die Aufrauhung mechanisch oder oxidativ erfolgt, wobei dann die Aufrauhung aus einer dünnen Oxidschicht besteht, und die Gewebe oder nonvowens zu Paketen gebündelt werden , eingefasst in Rahmen aus nichtkorrodierendem Material.

3. Verfahren nach Anspruch 1, dadurch gekennzeichnet, dass der Katalysatorträger aus nichtkorrodierenden porösen Materialien besteht.

4. Verfahren nach Anspruch 1, dadurch gekennzeichnet, dass der Katalysatorträger aus Kohlenstoff-Fasern, oder Kohlenstoffporösmaterial mit hoher spezifischer Oberfläche besteht.

5. Verfahren gemäss Ansprüch 1, dadurch gekennzeichnet, dass der Katalysatorträger aus Keramikmaterialien mit Zeolithstruktur besteht.

6. Verfahren nach Anspruch 1, dadurch gekennzeichnet, dass der Katalysatorträger aus nichtkorrodierendem geschlossenzelligem organischem oder anorganischem Polymer oder Polykondensationsmaterial besteht.

7. Verfahren nach Anspruch 1 , dadurch gekennzeichnet, dass das Halbleiteroxid Titandioxid und das Edelmetall Palladium oder Platin, jeweils in der Partikelform mit hoher spezifischer Oberfläche ist.

8. Verfahren nach Anspruch 1, dadurch gekennzeichnet, dass das Halbleiteroxid, Hafniumoxid oder Zirkonoxid und das Edelmetall Platin oder Palladium ist, jeweils in der Modifikation mit einer hohen spezifischen Oberfläche.

9. Verfahren nach Anspruch 1, dadurch gekennzeichnet, dass die Elemente gemäss a) in der Form ihrer Chloridsalze eingesetzt und nach Konvertierung in deren Oxide appliziert werden.

10. Verfahren nach Anspruch 1 bis 9, dadurch gekennzeichnet, dass die Lichtquelle eine Niederdruckquarzlampe ist.

11. Verfahren nach den Ansprüchen 1 bis 10 dadurch gekennzeichnet, dass die Waschzone gemäss c) kontinuierlich oder zeitintervalweise durchlaufen wird und pro Zeitinterval eine vollkommene Benetzung und Waschung des Katalysatorträgers mit den Katalysatoren gemäss a) erfolgt.

12. Verfahren nach den Ansprüchen 1 bis 11, dadurch gekennzeichnet, dass die Wäsche mittels Wasser erfolgt.

13. Verfahren gemäss den Ansprüchen 1 und 12, dadurch gekennzeichnet dass dem wässrigen Lösemittel oxidierende Chemikalien zugesetzt werden.

14. Verfahren zur photokatalytischen Mineralisation, gemäss Anspruch 1, dadurch gekennzeichnet, dass zur besseren Mineralisation der unerwünschten chemischen Stoffe dem zu reinigenden Substrat Mineralisationshilfsmittel zugesetzt werden.

15. Verfahren nach Anspruch 14, dadurch gekennzeichnet, dass dem zu reinigenden Substrat Ammoniakgas zugesetzt wird.

16. Verfahren nach Anspruch 1, dadurch gekennzeichnet, dass mindestens ein Element der VIII-ten Gruppe gemäss a) der Menge von 0 bis 15 Gewichtsprozent, bezogen auf die Gesamtkatalysatormenge zum Einsatz kommt.

17. Verfahren gemäss einem oder mehreren der Ansprüche 1 bis 16, dadurch gekennzeichnet, dass die zu reinigenden Substrate durch ein Schwebebett im räumlich geschlossenen System geleitet werden, bestehend aus; den Unterpunkten a) und b).

18. Verfahren gemäss Anspruch 17, dadurch gekennzeichnet, dass nach diesem Verfahrensprinzip gasförmige Produkte entstehen, die im System keinem Auswaschvorgang unterliegen.

19. Verfahren gemäss Anspruch 1, dadurch gekennzeichnet, dass die Oxide gemäss a) solche der folgenden Formeln sind, M₂Oₓ und M₁M₂Oₓ , wobei darstellen;
x - ein stöchiometrischer oder unterstöchiometrischer Wert bezogen zur Wertigkeit der Elemente M₁ und M₂
M₁ - Element der Gruppen Ia, IIa oder IIb des Periodensystems der chemische Elemente
M₂ - die Elemente Ti, Zr, Hf, V, Nb, Ta sowie solche der IIIb-Gruppe wie Yttrium und Scandium.

20. Verfahren nach Anspruch 1, dadurch gekennzeichnet, dass die Konversion der Gase unter der Einwirkung eines elektrischen Feldes erfolgt.

21. Vorrichtung zur Reinigung von Gasen, Abgasen, Dämpfen und Solen die mit unerwünschten chemischen Stoffen kontaminiert oder gemischt sind, mittels Photokatalysereaktionen die an der Oberfläche von Katalysatoren stattfinden, nach dem Verfahren gemäss Anspruch 1, wobei die Vorrichtung aus folgenden Bestandteilen besteht; aus
f) einem geschlossenen Gehäuse, aus einem gegen Korrosionen widerstandsfähigem Material, das ausgerüstet ist mit Zu- und Abfluss-Stutzen für das Verfahrenssubstrat und das Verfahrensprodukt sowie Lagern und Klemmen für die Katalysatorträger mit Katalysatoren und die Lichtquellen für kurzwelliges Licht,
g) einer Umrahmung zur Aufnahme des Katalysatorträgers mit den Katalysatoren.
h) einem Gerät zur Bewegung des Katalysatorträgers und der Katalysatoren durch eine innerhalb des Gehäuses befindliche Waschzone
i) mindestens einer Lichtquelle für kurzwelliges Licht im Wellenbereich zwischen 250 bis 400 nm.

22. Vorrichtung nach Anspruch 21 , dadurch gekennzeichnet, dass das Gehäuse gemäss f) eine Mulde zur Aufnahme einer Badflüssigkeit enthält, ausgestattet mit entsprechenden Zu- und Abfluss-Stutzen für die Badflüssigkeit.

23. Vorrichtung nach Anspruch 21, dadurch gekennzeichnet, dass die Umrahmung mit dem Katalysatorträger und Katalysatoren gemäss g) im Gehäuse gemäss f) beweglich so angeornet ist, dass sie das Bad zur Wäsche in vollem Umfang durchläuft.

24. Vorrichtung gemäss Anspruch 21 , dadurch gekennzeichnet, dass im Gehäuse gemäss f) sich eine Sprühvorrichtung befindet, zum Waschen des Katalysatorträgers mitsamt den Katalysatoren, wobei das Waschwasser ins Bad abläuft und im Kreislaufverfahren wieder versprüht wird.

25. Vorrichtung nach Anspruch 24, dadurch gekennzeichnet, dass die Sprühvorrichtung eine Intervalschaltung besitzt.

26. Vorrichtung nach Anspruch 21, dadurch gekennzeichnet, dass die Umrahmung gemäss g) ein zylindrisches Gebilde ist, mit einer Mittelachse, einem Hohlraum um die Achse und darauffolgend einem Behälter in Rundform, der in Taschen unterteilt sein kann und der beidseitig mit der Mittelachse so verbunden ist, dass ein geschlossener Behälter entsteht (14) und die äusseren (62) und inneren (63) Zylindermäntel so konstruiert sind, dass sie gut gasdurchlässig sind und den Katalysatorträger mit den Katalysatoren gut aufnehmen und fixieren.

27. Vorrichtung nach Anspruch 21 und 22, dadurch gekennzeichnet, dass die Umrahmung gemäss g) ein quadratisches Gebilde ist in Paketform, das den Katalysatorträger mit den Katalysatoren aufnimmt und das im Gehäuse gemäss g) vertikale Gleitlager besitzt in denen es auf- und abpendelt und dabei ins Waschbad taucht.

28. Vorrichtung nach den Ansprüchen 21, 22 und 27, dadurch gekennzeichnet, dass die Vorrichtung im Doppel oder Vielzahl betrieben wird und eine Schaltsynchronisierung vorhanden ist, die die Vorrichtungsbeschickung derart schaltet, dass kein Verfahrensunterbruch während der Katalysatorwäsche entsteht.

29. Vorrichtung nach Anspruch 21, dadurch gekennzeichnet, dass bei gasförmigen Mineralisierungsprodukten, im Katalysatorschwebeverfahren, der Rahmen gemäss g) ein gasdurchlässiger Boden ist.

30. Vorrichtung nach Anspruch 21, dadurch gekennzeichnet, dass sie aus mehreren Teilkammern zur Umsetzung der Substrate besteht, zur Realisierung von Mehrstufenverfahren.

31. Vorrichtung nach Anspruch 21 zur Reinigung von Gasen, dadurch gekennzeichnet, dass das Katalysatorfestbett mit einer Quelle elektrischer Potentialdifferenz verbunden ist.

32. Vorrichtung nach Anspruch 31, dadurch gekennzeichnet, dass das Katalysatorfestbett relativ zur Photonenquelle bewegt wird.

## Claims

1. A method for purifying gases, exhaust gases, vapors and brines, which are contaminated with or contain undesirable chemical substances, by means of photocatalytic reaction occuring on the surface of catalysts, wherein
a) the substrates to be purified are fed through catalysts contained in a physically closed system consisting of,
a catalyst carrier with high specific surface, which is long term resistant to chemical corrosion and shortwave light, and which shows the mechanical stability needed for mobile mechanical parts,
a catalyst, which is applied to said catalyst carrier, and which consist of at least one semiconduktor-metalic oxide or oxide of the elements of the IIa or IIb group of the elements of the periodic table of chemical elements mixed and/or loaded with at least one metal of the precious metal series of the VIII group of the periodic table of chemical elements,
a catalyst, which is applied to said catalyst carrier, and which consist of at least one element of the lanthanides, actinides, and the IIIb group of the periodic table of chemical elements,
b) a photone source produces radiation, with shortwave light of wavelengths from 250 to 400 nm, applied to said catalysts,
c) said catalysts, applied to said catalyst carrier , are dived and transported trough, at least one physically closed washing zone and treated with polar solvents.

2. The method of claim 1, wherein said catalyst carrier consists of roughened wovens or nonwovens made of stainless steel, titanium, tantalum, niobium, zirconium, hafnium, or metals of the VIII group of the periodic table of chemical elements, whereby roughening is conducted mechanically or oxidatively, in the latter case resulting in a roughening thin oxide layer, and whereby said wovens and nonwovens are joined into packets and framed by noncorroding materials.

3. The method of claim 1, wherein said catalyst carrier consists of noncorroding, porous material.

4. The method of claim 1, wherein said catalyst carrier consists of carbon fibers or porous carbon material with a high specific surface.

5. The method of claim 1, wherein said catalyst carrier consists of ceramic material with zeolite structure.

6. The method of claim 1, wherein said catalyst carrier consists of noncorroding closed-cell organic or inorganic polymeric or polycondensation material.

7. The method of claim 1, wherein said semiconductor oxide is titanium dioxide and said precious metal is palladium or platinum, used in particle form with a high specific surface.

8. The method of claim 1, wherein said semiconductor oxide is hafnium oxide or zirconium oxide and said precious metal is platinum or palladium, used in the modified form with a high specific surface.

9. The method of claim 1, wherein said elements according to c) are used as chloride salts and are, after their conversion, applied as oxides.

10. The method of any one of claims 1 to 9, wherein a low-pressure quartz lamp is used as said light source.

11. The method of any one of claims 1 to 10, wherein said washing zone according to c) is passed through continuously or at time intervals, resulting in a complete wetting and washing of said catalyst carrier with said catalysts according to a)

12. The method of any one of claims 1 to 11, wherein said washing is conducted with water.

13. The method of any one of claims 1 to 12, wherein oxidizing chemicals are added to said aqueous solution.

14. A method for photocatalytic mineralization according to claim 1, wherein mineralization of undesirable chemical substances is improved by adding mineralization aids to said substrate to be purified.

15. The method of claim 14, wherein ammonia is added to said substrate to be purified.

16. The method of claim 1, wherein at least one element according to a) of the series of precious metals is applied in an amount equaling 0 to 15 weight percent of the total amount of catalyst used.

17. The method of any one of claims 1 to 16, wherein said substrates to be purified are fed through a fluidized bed in a physically closed system consisting of: subitem a), and b).

18. The method of claim 17, wherein gaseous products are produced which do not undergo a washing-out method in the system.

19. The method of claim 1, wherein said oxides according to a) have the following formulae: M₂Ox and M₁M₂Ox, where
M₁ - elements of the Ia, IIa and IIb group of the periodic table
M₂ - Ti, Zr, Hf, V, Nb, Ta, and elements of group IIIb,
x - an stechiometric or understechiometric value in relation to value of the M₁ and M₂ elements, and wherein the platinum series consists primarily of palladium, platinum, and Rhodium.

20. The method of claim 1, characterized in that the conversion of treated fluids is effected in the presence of catalysts exposed to electrical fields.

21. An apparatus for carrying out the methods of any one of claims 1 consisting of the following principal components:
f) a closed housing consisting of corrosion-resistant material equipped with inlet and outlet nozzles for said substrate and bearings and clamps for said catalyst carriers with catalysts and said sources of shortwave light;
g) a frame to hold said catalyst carrier with said catalysts;
h) an apparatus for moving said catalyst carrier and catalysts in said housing according to f); in order to pass an inside the housing situated washing area,
i) at least one source of shortwave light of wavelengths between 250 and 400 nm.

22. The apparatus of claim 21, wherein said housing according to f) contains a cavity for receiving a bathing liquid equipped with necessary inlet and outlet nozzles for said bathing liquid.

23. The apparatus of claim 21, wherein said frame with said catalyst carrier and catalysts according to g) is flexibly affixed within said housing according to f) in such a way that its entirety passes through said bath according to e).

24. The apparatus of any one of claim 21 , wherein said housing according to f) contains a spraying apparatus for washing said catalyst carrier and catalysts, whereby said washing liquid returns into said bath and is recirculated for spraying.

25. The apparatus of claim 24, wherein said spraying apparatus is equipped with a time switch for interval washing.

26. The apparatus of any one of claim 21, wherein said frame according to g) is a cylindrical body with a central axle, a cavity surrounding said axle, followed by a round container, which may be subdivided into pockets and which in connected to said axle on both sides, resulting in a closed container whose outer and inner cylinder casings are constructed in such a manner that they are easily permeable for gases and can easily contain and fix said catalyst carriers and catalysts.

27. The apparatus of any one of claims 21 to 22, wherein said frame according to g) is a square object in a packet which contains said catalyst carrier and catalyst and which travels up and down on vertical plain bearings within said housing according to f) and submerges in said washing liquid

28. The apparatus of claims 21, 22, and 27, wherein two or more units are employed and switching of the feed method is synchronized in such a manner that said method is not interrupted during catalyst washing.

29. The apparatus of claim 21, wherein said frame according to g) consists of a plate which is permeable for gases when using said fluidized catalyst process for gaseous mineralization products.

30. The apparatus of claim 21, consisting of several subchambers for said substrate reaction in multi-stage processes.

31. The apparatus of claim 21, for puryfying gases, wherein the catalyst carrier/catalyst system, situated in the frame according g) is connected to a source of an electric tension potential difference.

32. The apparatus of claim 31 wherein said catalyst carrier/catalyst system is moved relatively in relationship to the photone source.

## Revendications

1. Procédé pour la purification de gaz d'échappement, de vapeurs et de sols contaminés ou mêlés avec des substances chimiques indésirables par des réactions photocatalytiques à la surface des catalyseurs, à l'occasion de quoi
a) les substrats à purifier sont conduits sur les catalyseurs se trouvant dans un système fermé, consistant en:
Un support de catalyseur avec une grande surface spécifique par rapport à la matière utilisée étant résistante en longue durée à la corrosion chimique et à la lumière à onde courte et possédant une stabilité mécanique comme elle est requise pour des pièces mécaniques mobiles,
un catalyseur monté sur le support de catalyseur, se composant au moins d'un oxyde métallique à semi-conducteur ou d'un oxyde des éléments du groupe IIa ou IIb de la classification périodique des éléments chimiques, mixte et/ou chargé au moins avec un métal du groupe du platine du groupe VIII de la classification périodique des éléments chimiques,
un catalyseur monté sur le support de catalyseur, se composant au moins d'un élément du groupe des lanthanides, des actinides et du groupe IIIb de la classification périodique des éléments chimiques;
b) les catalyseurs sont irradiés avec la lumière à onde courte d'une longueur d'onde de 250 jusqu'à 400 nm,
c) le support de catalyseur avec les catalyseurs est conduit au travers d'une zone de lavage se trouvant dans le système fermé et alimentée par des solvants polaires.

2. Procédé selon la revendication 1, caracterisé en ce que le support de catalyseur consiste en des tissus grattés ou des nontissés en acier spécial, titane, tantale, niobium, zircon, hafnium, des métaux du groupe VIII de la classification périodique des éléments chimiques et que le grattement est effectué mécaniquement ou par oxydation, à l'occasion de quoi le grattement consiste en une couche d'oxyde mince et que les tissus ou nontissés sont empaquetés, entourés par des cadres en matière non-corrodante.

3. Procédé selon la revendication 1, caractérisé en ce que le support de catalyseur consiste en des matières non-corrodantes et poreuses.

4. Procédé selon la revendication 1, caractérisé en ce que le support de catalyseur consiste en des fibres de carbone ou en matière poreuse de carbone avec une grande surface spécifique.

5. Procédé selon la revendication 1, caractérisé en ce que le support de catalyseur consiste en des matières céramiques à structure de zéolithes.

6. Procédé selon la revendication 1, caractérisé en ce que le support de catalyseur consiste en un polymère organique ou une matière de polycondensation organique ou inorganique non-corrodants à alvéoles fermées.

7. Procédé selon la revendication 1, caractérisé en ce que l'oxyde à semi-conducteur est de l'oxyde titanique et le métal spécial est du palladium ou platine, chaque fois en particules avec une grande surface spécifique.

8. Procédé selon la revendication 1, caractérisé en ce que l'oxyde à semi-conducteur est de l'oxyde de hafnium ou de l'oxyde de zirconium et que le métal spécial est du palladium ou du platine, chaque fois dans la modification avec une grande surface spécifique.

9. Procédé selon la revendication 1, caractérisé en ce que les éléments chimiques suivant a) sont employés en qualité de leurs sels de chlorure et, après la transformation, appliqués en leurs oxydes.

10. Procédé selon les revendications 1 - 9, caractérisé en ce que la source lumineuse est une lampe à tube de quartz à basse pression.

11. Procédé selon les revendications 1 - 10, caractérisé en ce que la zone de lavage suivant c) est passée continuellement ou à intervalles et qu'à chaque intervalle, un mouillage et lavage total du porteur de catalyseur avec les catalyseurs suivant a) est effectué.

12. Procédé selon les revendications 1 - 11, caractérisé en ce que le lavage est effectué avec de l'eau.

13. Procédé selon les revendications 1 et 12, caractérisé en ce que des substances chimiques oxydantes sont ajoutées au solvant aqueux.

14. Procédé pour la minéralisation photocatalytique selon le revendication 1, caractérisé en ce que des auxiliaires de minéralisation sont ajoutés au substrat à purifier pour obtenir une meilleure minéralisation des substances chimiques indésirables.

15. Procédé selon la revendication 14, caractérisé en ce que du gaz ammoniacal est ajouté au substrat à purifier.

16. Procédé selon la revendication 1, caractérisé en ce que, au moins, un seul élément suivant a) d'une quantité de 0 - 15 pourcentage en poids par rapport à la quantité de catalyseur totale est employé.

17. Procédé selon l'une ou plusieures des revendications 1 - 16, caractérisé en ce que les substrats à purifier sont conduits au travers d'un lit flottant dans le système fermé suivant a) et b).

18. Procédé selon la revendication 17, caractérisé en ce que, d'après ce principe de procédé, des substances gazeuses ne pas succombées à une procédure de lavage dans le système se produisent.

19. Procédé selon la revendication 1, caractérisé en ce que les oxydes d'après a) sont les suivants: M₂Ox, M₁M₂Ox,
x - representant valeur stichiométrique ou sousstichiométrique en relation avec la valeur des éléments M₁ et M₂,
M₁ - representant éléments des groupes Ia, IIa ou IIb de la classification des éléments chimiques,
M₂ - representant les éléments Ti, Zr, Hf, V, Nb, Ta aussi que tels du groupe IIIb, comme de l'yttrium et du scandium,
éléments du groupe des métaux spéciaux du palladium, du platine et du rhodium.

20. Procédé selon la revendication 1, caractérisé en ce que la transformation des gaz est effectuée sous l'effet d'un champs électrique.

21. Dispositif selon la revendication 1 pour la purification de gaz, de gaz d'échappement, de vapeurs et de sols contaminés ou mêlés avec des substances chimiques indésirables par des réactions photocatalytiques à la surface des catalyseurs, à l'occasion de quoi ce dispositif consiste en les éléments principaux les suivants:
f) En une boîte fermée en une matière résistante à la corrosion, munie des tuyaux d'entrée et de décharge pour le substrat et le produit du procédé aussi que des paliers et pinces pour les supports de catalyseur avec les catalyseurs et les sources lumineuses pour la lumière à onde courte,
g) en en cadre pour le logement du support de catalyseur avec les catalyseurs,
h) en un dispositif pour le mouvement du support de catalyseur et des catalyseurs au travers d'une zone de lavage à l'intérieur de la boîte aussi que,
i) au moins, en une source lumineuse pour la lumière à onde courte d'une longueur d'onde entre 250 et 400 nm.

22. Dispositif selon la revendication 21, caractérisé en ce que la boîte suivant f) comporte une cavité pour un liquide du bain, munie des tuyaux d'entrée et de décharge correspondants pour le liquide du bain.

23. Dispositif selon la revendication 22, caractérisé en ce que le cadre avec le support de catalyseur et les catalyseurs suivant g) est installé dans la boîte suivant f) de sorte qu'il soit mobile et qu'il traverse le bain de lavage totalement.

24. Dispositif selon la revendication 21, caractérisé en ce que dans la boîte suivant f) se trouve un pulvérisateur pour le lavage du support de catalyseur avec les catalyseurs, à l'occasion de quoi l'eau de lavage s'écoule au bain et puis est pulvérisée de nouveau comme dans un système de circulation.

25. Dispositif selon la revendication 24, caractérisé en ce que le pulvérisateur est opéré à commande intermittante.

26. Dispositif selon la revendication 21, caractérisé en ce que le cadre suivant g) est un corps cylindrique avec un axe central, un espace vide autour de l'axe et puis un réservoir rond qui peut être divisé en poches et qui est connecté à l'axe central de manière qu'un réservoir fermé soit créé (14) et que les surfaces cylindriques extérieures (62) et intérieures (63) son construites de sorte qu'elles permettent la perméabilité au gaz et portent bien le support de catalyseur avec les catalyseurs.

27. Dispositif selon les revendications 21 et 22, caractérisé en ce que le cadre suivant g) est un corps carré et paqueté portant le support de catalyseur avec les catalyseurs et comportant dans la boîte suivant g) des paliers à glissement verticaux pour monter et descendre, ainsi plongeant dans le bain de lavage.

28. Dispositif selon les revendications 21, 22 et 27, caractérisé en ce que le dispositif est opéré en exécution double ou multiple et qu'il existe une synchronisation de commande réglant le fonctionnement du dispositif de manière qu'il n'y ait pas d'interruption du procédé pendant le lavage des catalyseurs.

29. Dispositf selon la revendication 21, caractérisé en ce qu'avec des produits de minéralisation gazeux avec le procédé de flottement des catalyseurs, le cadre suivant g) est un fond perméable au gaz.

30. Dispositif selon la revendication 21, caractérisé en ce qu'il consiste en plusieures chambres pour la transformation des substrats, ainsi réalisant des procédés à plusieurs stades successifs.

31. Dispositif selon la revendication 21 pour la purification de gaz, caractérisé en ce que le lit fixe de catalyseur est connecté à une source de différence du potentiel électrique.

32. Dispositif selon la revendication 31, caractérisé en ce que le lit fixe de catalyseur est déplacé en relation avec la source photonique.
